# EUROPEAN PATENT SPECIFICATION

(11) **EP 1 464 828 B1**
(45) Date of publication and mention of the grant of the patent: **14.06.2006**
(21) Application number: 04015516.0
(22) Date of filing: 04.02.2003
(51) Int. Cl.: F02M 61/16, F02M 51/06

(54) **Thermal compensator unit for use in a metering device**
Kompensator zum Ausgleich von Wärmedehnungen für eine Dosiervorrichtung
Compensateur pour la compensation de dilatations thermiques pour un dispositif de dosage

(43) Date of publication of application: 06.10.2004
(62) Divisional of application: 03002397.2
(73) Proprietor: Siemens VDO Automotive S.p.A., 56040 Fauglia (Pisa) (IT)
(72) Inventor: Pulejo, Marco, Loc. S. Piero a Grado 56010 Pisa (IT); Shen, Jim, Changchoun, Jilin Province 130012 (CN)
(74) Representative: Berg, Peter

(56) References cited:
- WO-A-01/98651
- WO-A-02/25096
- US-A1- 2002 179 062
- US-B1- 6 260 541

## Description

The present invention relates to a thermal compensator unit for use in a metering device for dosing pressurised fluid, in particular an injection valve for a fuel injection system in an internal combustion engine, said metering device comprising a housing with a metering opening, a valve needle passing through said housing, having a first end actuated by an actuator assembly outside said housing and a second end controlling the opening and closing of said metering opening, wherein said thermal compensator unit is arranged to cooperate with the actuator unit and the housing to compensate for different thermal expansion of the housing and the actuator assembly to ensure elastic contact between an end stop of the housing, the actuator assembly and the valve needle, said thermal compensator unit comprising transmission means for transmitting an axial extension of the actuator assembly to a compensator housing by urging a hydraulic fluid from a first fluid chamber to a second fluid chamber in an activation phase of said actuator assembly, wherein the first fluid chamber and the second fluid chamber are connected and comprise said hydraulic fluid in a predetermined distribution in an initial state in which the actuator assembly is not active, and a restoring means to return the hydraulic fluid to its initial state from the second fluid chamber to the first fluid chamber in a deactivation phase of the actuator assembly.

Further, the present invention relates to a metering device, in particular an injection valve for a fuel injection system in an internal combustion engine, comprising a housing with a metering opening, a valve needle passing through said housing, having a first end actuated by an actuator assembly outside said housing and a second end controlling the opening and closing of said metering opening.

In the construction of injector valves for gasoline high pressure direct injection through the actuation of an actuator assembly, in particular a piezo-electric group, it is essential that the requirements of fuel flow rate and the geometry of the jet are met under all possible operating conditions of the injector.

Of particular importance is the influence of the temperature on the magnitude of the variations of the principle functional parameters of the injector. Within the required full range of the operating temperature from -40 °C to +150 °C, the flow rate and other parameters that characterise the operation of the injector must remain within predetermined limits of tolerance.

As a result of the thermal expansions experienced by the outer steel housing of the injector, the piezo-electric actuator, having a lower coefficient of thermal expansion than the outer housing, would not maintain proper contact between its fixed end stop surface and the top end of the valve needle.

To deal with this problem, i.e. to compensate the different thermal expansions of housing and piezo-electric stack, the injector valve is typically equipped with a hydraulic thermal compensation unit. As the operation temperature increases, the thermal compensation unit recovers the clearance that would otherwise be created between the valve needle and the piezo-electric actuator, thereby avoiding incorrect and potentially hazardous operation conditions.

Fundamental requirements for such a thermal compensator unit are
- the ability to compensate the different thermal expansions guaranteeing the required capacities of injection to be obtained through the desired lift of the valve needle at the several predictable temperatures for the vehicle's activity,
- effectiveness during the usually fast thermal transitions,
- a total reliability of the device, and
- low manufacturing and assembly times and costs.

US 2002/0179062 A1 discloses a hydraulic compensator for a piezoelectric fuel injector. The fuel injector comprises an injector housing and a valve body, a piezoelectric actuator that has a first and a second end, a valve needle coupled to the first end of the piezoelectric actuator and the hydraulic compensator coupled to the second end of the piezoelectric actuator. The injector housing encloses the piezoelectric actuator and the hydraulic compensator. The valve body is fixed to the injector housing and encloses the valve needle. The hydraulic compensator comprises a housing with a fluid chamber and a supply reservoir filled with hydraulic oil that are connected by a throttling passage. The supply reservoir comprises bellows so that the volume of the supply reservoir is variable within predetermined limits. A compression spring is arranged outside the supply reservoir connected to the bellows compressing the volume of the supply reservoir and urging the hydraulic oil through the throttling passage into the fluid chamber to resume its equilibrium position. A piston that is slidable in axial direction is arranged in the fluid chamber. An o-ring is used between the piston and the housing of the hydraulic compensator to seal the fluid chamber. The volume of the fluid chamber is variable dependent on the axial position of the piston in the fluid chamber.

However, these plastic or rubber dynamic sealing elements, i.e. o-rings cannot be confidentially considered as sealing features that allow a zero-leakage performance. Also, these plastic or rubber dynamic sealing elements do apply friction forces between the sliding elements so that the sliding parts are not able to recover exactly the same equilibrium position without any residual misalignment due to friction forces at each temperature condition.

WO 01/98651 A2 discloses a device for transmitting a movement with compensation for play. A fluid chamber is formed by a piston in a cylinder and a supply reservoir is formed by bellows that also function as compression springs. The fluid chamber and the supply reservoir are connected by a valve and by a fluid passage arranged between the piston and the cylinder. A piezoactuator pushes the piston in axial direction into the cylinder in an activation phase of the piezoactuator and a fluid is pressed from the fluid chamber through the fluid passage into the supply reservoir. The bellows urge the fluid from the supply reservoir through the valve back into the fluid chamber in a deactivation phase of the piezoactuator.

In view of the foregoing it is an object underlying the present invention to provide a thermal compensator unit for use in a metering device of the above-mentioned type with an improved behaviour, in particular with respect to the equilibrium position, as well as a metering device including such a thermal compensator unit.

This object is achieved by a thermal compensator unit with the features of appended claim 1.

Advantageous embodiments of the thermal compensator unit according to the present invention are disclosed in the respective following dependent claims.

A metering device according to the present invention is defined in claim 3.

According to the invention, the thermal compensator unit comprises a transmission means for transmitting an axial extension of an actuator assembly to a compensator housing by urging a hydraulic fluid from a first fluid chamber to a second fluid chamber in an activation phase of the actuator assembly, wherein the first fluid chamber and the second fluid chamber are connected and comprise the hydraulic fluid in a predetermined distribution in an initial state in which the actuator assembly is not active. It further comprises a restoring means to return the hydraulic fluid to its initial state from the second fluid chamber to the first fluid chamber in a deactivation phase of the actuator assembly. It provides at least one respective elastic element for the first fluid chamber and the second fluid chamber so that a respective volume of the first fluid chamber and the second fluid chamber is variable within predetermined limits. The transmission means is connected to the elastic element of the first fluid chamber and/or builds a part thereof, and the restoring means is connected to the elastic element of the second fluid chamber and/or builds a part thereof. Therewith, the first and second fluid chambers can be provided hermetically sealed with variable volumes without the need to use plastic or rubber dynamic sealing elements between the sliding parts. This leads to the ability to recover exactly the same equilibrium position at each temperature condition, since no residual misalignment due to friction forces between the sliding parts occurs. A side-effect is that a zero-leakage performance is allowed.

Preferably, said respective elastic element is a metal membrane.

Further, according to the invention, the metering device provides a thermal compensator unit according to the present invention.

The invention, both its construction and its method of operation together with additional objects and advantages thereof, will best be understood from the following description when read in conjunction with the accompanying drawings, wherein
- Fig. 1: is a schematic axially cross section of a thermal compensator unit that does not form part of the present invention, and
- Fig. 2: is a schematic axially cross section of a thermal compensator unit according to an exemplary embodiment of the present invention.

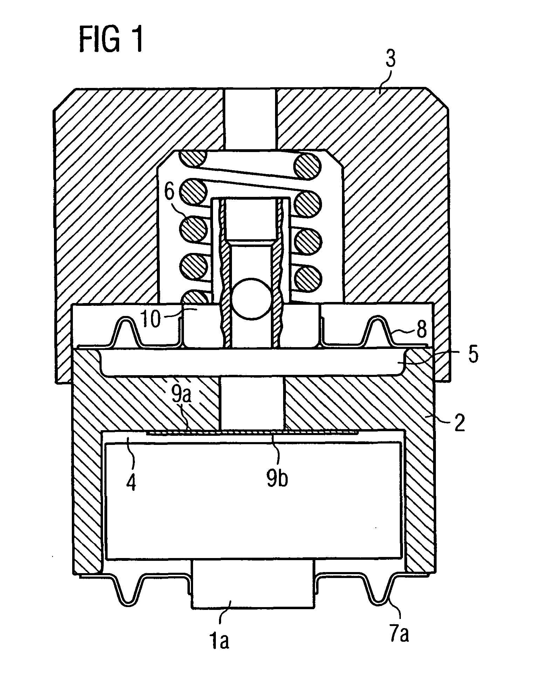

Fig. 1 shows a thermal compensator with an adjustable stiffness, i.e. setting mechanism for the equilibrium position, based on a sliding sleeve. As outlined in Fig. 1, a compensator housing comprises an upper compensator housing part 3 and a lower compensator housing part 2, wherein the lower compensator housing part 2 contains a slidable piston 1a, which is able to slide axially inside the cylindrical lower compensator housing part 2. The upper compensator housing part 3 rests via its upper surface on the fix end stop of the injector, while the lower end rod of the piston 1a is in contact with the actuator assembly, e.g. the piezo-electric actuator. The lower end rod of the piston 1a is hermetically connected to a first metal membrane 7a that seals the bottom of the first fluid chamber 4 in which the piston 1a can axially slide. On the opposite side of the lower compensator housing part 2, i.e. the other side with respect to the side on which the piston 1a and the first metal membrane 7a are arranged, a second fluid chamber 5 is formed which is sealed by a second metal membrane 8 and a first guiding element 10 that holds a first end of a helical spring 6, i.e. provides a seat for the helical spring 6.

The other end of the helical spring 6 rests against the inside of the upper compensator housing part 3 which is built as a sleeve overlapping the lower compensator housing part 2. The first and second fluid chambers 4, 5 are separated by a valve 9a which is formed by a spot welded metal plate having an orifice 9b to generate a high resistance for fluid passing from the first fluid chamber 4 to the second fluid chamber 5 and a low resistance for fluid passing from the second fluid chamber 5 to the first fluid chamber 4. The fluid with which both fluid chambers 4, 5 are fully filled and in which the piston 1a is therewith fully emerged might be silicone oil.

In the following, the operation of the thermal compensator will be described. As mentioned, the top surface of the upper compensator housing part 3, i.e. the sleeve, is in contact with the inlet fitting of the injector and the lower surface of the piston 1a is in contact with the actuator assembly, e.g. a piezo-electric actuator. The valve 9a which might be formed as a disk is welded by two (or more) spots at the portion of the lower compensator housing part 2 that separates the first and the second fluid chambers 4, 5 from each other and builds a fluid passage between them. The valve 9a presents a high hydraulic resistance during the actuation phase of the piezo-stack and allows a bigger oil passage due to the flapping effect of this metallic disk 9a during the following deactivation phase of the piezo-stack.

This effect is given, since during the actuation phase of the piezo-stack, the piston 1a is pushed upwardly from the piezo-electric group, which action forces the silicone oil contained in the first fluid chamber 4 to pass through the orifice 9b in the disk 9a into the second fluid chamber 5. On the other hand, during the deactivation phase of the piezo-stack, the oil contained in the second fluid chamber 5 can quickly reflow into the first fluid chamber 4 through the gap generated between the surface on which the valve 9a is spot-welded and the valve 9a due to the flapping effect of the disk that forms the valve 9a at portions in which it is not spot-welded to said surface.

The relative position of piston 1a and upper compensator housing part will be changed by thermal expansion. In such relatively slow motion, the hydraulic fluid will flow through the orifice 9a, the piston will get a new equilibrium position and the volumes of chambers 4 and 5 will be changed accordingly, so as the shape deformation of the metal membranes 7a, 8.

At each injection, the continuous position recovery of the piston 1a is guaranteed from the force of the spring 6 that pressurises the second fluid chamber 5, since it is clamped between the first guiding element 10 and the upper compensator housing part 3.

During the assembly process, this spring force can be set through the sliding movement between the upper compensator housing part 3 and the lower compensator housing part 2. After the calibration, these housing parts 2, 3 will be welded together and the spring preload or pre-compression will be "freezed". As mentioned before, the upper compensator housing part 2 might alternatively be screwed onto the lower compensator housing part 3 and the spring force can be set by more or less screwing the housing parts together. Fixing the relative position of both housing parts might then perform the freezing of the spring preload.

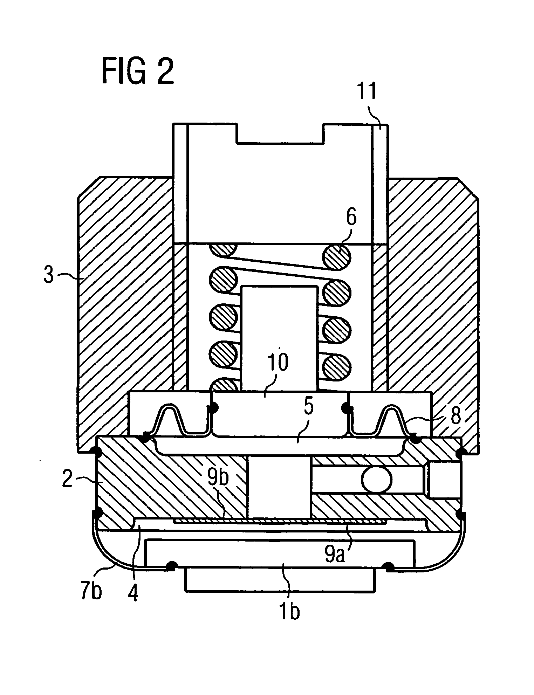

Fig. 2 shows a thermal compensator according to an exemplary embodiment of the present invention wherein the preload or pre-compression of the helical spring is adjustable with a screw that guides the second end of the helical spring 6, which screw 11 is fitted inside the upper compensator housing part 3. Apart from this screw 11 the thermal compensator according to the exemplary embodiment is rather similar to the thermal compensator shown in Fig. 1, with the additional exception that not a slidable piston 1a is provided to be in contact with the actuator assembly, but a plate 1b which is welded to a metal membrane 7b with a saucer-like shape that is welded to the lower compensator housing part 2 to build the first fluid chamber 4.

The function is identical to that of the thermal compensator shown in Fig. 1, i.e. the oil can only flow through the orifice 9b of the valve 9a, since the oil pressure itself that suddenly rises up, seals the passage through the side of the disk by a metal-to-metal sealing contact. During the deactivation phase of the piezo-stack, the oil contained in the second fluid chamber 5 can quickly reflow into the first fluid chamber 4 through the gap generated between the lower surface of the lower compensator housing part 2 to which the valve is spot-welded and the disk of the valve 9b due to its flapping effect. The relative position of piston 1b and upper compensator housing part will be changed by thermal expansion. In such relatively slow motion, the hydraulic fluid will flow through the orifice 9a, the piston will get a new equilibrium position and the volumes of chambers 4 and 5 will be changed accordingly, so as the shape deformation of the metal membranes 7b, 8. In this embodiment, the continuous position recovery of the plate 1b is guaranteed from the force of the spring 6 which is clamped between the first guide 10 and the screw 11 that forms a second guide. The spring 6 keeps the oil pressurised so that the oil flows back after each injection for restoring the pressure equilibrium between the fluid chambers, i.e. so that the equilibrium position that is defined by the pre-compression of the spring which might be adjusted with the screw 11 and which is constant for all temperature ranges due to the usage of elastic elements, such as the shown metal membranes, to have variable volumes of the first and second fluid chambers 4, 5. As mentioned above, during the assembly process, the spring force can be set by screwing the screw more or less into the upper compensator housing part 3.

According to the present invention a sealing that can reach a zero leaking range is achieved together with an elimination of friction forces between the sliding parts and the possibility of calibrating the preload force during the assembly and calibration phase without changing the hydraulic and reservoir chamber height, that is without moving any component other than the adjusting screw and/or the sliding upper compensator housing part 3.

Therewith, a thermal compensator unit is disclosed that allows to precisely set and keep an equilibrium position by providing an adjustable pre-compression on one of two fluid chambers. Further, the fluid chambers respectively comprise at least one elastic element so that the respective volume is variable, which elastic elements hermetically seal the fluid chambers, which leads to the effect that no plastic or rubber dynamic sealing is necessary between the sliding parts in a hydraulic compensator, in particular since the moving parts of the hydraulic compensator are preferably hermetically connected to said respective elastic element and/or build a part thereof.

The features disclosed in the foregoing description, in the drawings, and in the claims may allow as well as in any possible combination be important for the realisation of the invention.

## Claims

1. A thermal compensator unit for use in a metering device for dosing pressurised fluid, in particular an injection valve for a fuel injection system in an internal combustion engine, said metering device comprising
- a housing with a metering opening,
- a valve needle passing through said housing, having a first end actuated by an actuator assembly outside said housing and a second end controlling the opening and closing of said metering opening,
wherein said thermal compensator unit can be arranged to cooperate with the actuator unit and the housing to compensate for different thermal expansion of the housing and the actuator assembly to ensure elastic contact between an end stop of the housing, the actuator assembly and the valve needle, said thermal compensator unit comprising
- transmission means (1b) for transmitting an axial extension of the actuator assembly to a compensator housing (2, 3) by urging a hydraulic fluid from a first fluid chamber (4) to a second fluid chamber (5) in an activation phase of said actuator assembly, wherein the first fluid chamber (4) and the second fluid chamber (5) are connected and comprise said hydraulic fluid in a predetermined distribution in an initial state in which the actuator assembly is not active, and
- a restoring means (6) to return the hydraulic fluid to its initial state from the second fluid chamber (5) to the first fluid chamber (4) in a deactivation phase of the actuator assembly,
said first fluid chamber (4) and said second fluid chamber (5) respectively comprise at least one elastic element (7b, 8) so that a respective volume of the first fluid chamber (4) and the second fluid chamber (5) is variable within predetermined limits and said transmission means (1b) is connected to said elastic element (7b) of said first fluid chamber (4) and/or builds a part thereof, and said restoring means (6) is connected to said elastic element (8) of said second fluid chamber (5) and/or builds a part thereof.

2. The thermal compensator unit according to claim 1, **characterised in that** said respective elastic element (7a, 7b, 8) is a metal membrane.

3. A metering device, in particular an injection valve for a fuel injection system in an internal combustion engine, comprising
- a housing with a metering opening,
- a valve needle passing through said housing, having a first end actuated by an actuator assembly outside said housing and a second end controlling the opening and closing of said metering opening,
**characterised by**
- a thermal compensator unit according to anyone of claims 1 or 2.

## Patentansprüche

1. Wärmekompensatoreinheit zur Verwendung in einem Zumesssystem zum Dosieren von unter Druck gesetztem Fluid, insbesondere einem Kraftstoffeinspritzventil in einer Verbrennungskraftmaschine, wobei die Zumessvorrichtung folgendes umfasst:
- ein Gehäuse mit einer Zumessöffnung,
- eine durch das Gehäuse hindurch verlaufende Ventilnadel mit einem ersten Ende, welches von einer Betätigungsanordnung außerhalb des Gehäuses betätigt wird, und einem zweiten Ende, welches das Öffnen und Schließen der Zumessöffnung steuert,
wobei die Wärmekompensatoreinheit mit der Betätigungseinheit und dem Gehäuse zusammenwirken kann, um eine unterschiedliche Wärmedehnung des Gehäuses und der Betätigungsanordnung auszugleichen, um einen elastischen Kontakt zwischen einem Endanschlag des Gehäuses, der Betätigungsanordnung und der Ventilnadel sicherzustellen, wobei die Wärmekompensatoreinheit folgendes umfasst:
- ein Übertragungsmittel (1b) zum Übertragen einer axialen Ausfahrbewegung der Betätigungsanordnung auf ein Kompensatorgehäuse (2, 3) durch Verdrängen einer Hydraulikflüssigkeit aus einer ersten Fluidkammer (4) in eine zweite Fluidkammer (5) in einer Aktivierungsphase der Betätigungsanordnung, wobei die erste Fluidkammer (4) und die zweite Fluidkammer (5) verbunden sind und die Hydraulikflüssigkeit in einer vorgegebenen Verteilung in einem Ausgangszustand umfassen, in welchem die Betätigungsanordnung nicht aktiv ist, und
- ein Rückstellmittel (6) zum Zurückführen der Hydraulikflüssigkeit in ihren Ausgangszustand aus der zweiten Fluidkammer (5) in die erste Fluidkammer (4) in einer Deaktivierungsphase der Betätigungsanordnung,
wobei die erste Fluidkammer (4) und die zweite Fluidkammer (5) jeweils mindestens ein elastisches Element (7b, 8) umfassen, so dass ein jeweiliges Volumen der ersten Fluidkammer (4) und der zweiten Fluidkammer (5) innerhalb eines vorgegebenen Bereiches variabel ist und das Übertragungsmittel (1b) mit dem elastischen Element (7b) der ersten Fluidkammer (4) verbunden ist, und/oder einen Teil davon bildet, und das Rückstellmittel (6) mit dem elastischen Element (8) der zweiten Fluidkammer (5) verbunden ist und/oder einen Teil davon bildet.

2. Wärmekompensatoreinheit nach Anspruch 1, **dadurch gekennzeichnet, dass** das jeweilige elastische Element (7a, 7b, 8) eine Metallmembran ist.

3. Zumessvorrichtung, insbesondere ein Einspritzventil für ein Kraftstoffeinspritzsystem in einer Verbrennungskraftmaschine, mit
- einem Gehäuse mit einer Zumessöffnung,
- einer durch das Gehäuse hindurch verlaufenden Ventilnadel mit einem ersten Ende, welches von einer Betätigungsanordnung außerhalb des Gehäuses betätigt wird, und einem zweiten Ende, welches das Öffnen und Schließen der Zumessöffnung steuert,
**gekennzeichnet durch**
- eine Wärmekompensatoreinheit nach einem der Ansprüche 1 oder 2.

## Revendications

1. Unité de compensateur thermique à utiliser dans un dispositif de dosage destiné à doser un fluide sous pression, en particulier une soupape d'injection pour un système d'injection de carburant dans un moteur à combustion interne, ledit dispositif de dosage comprenant
- un boîtier avec une ouverture de dosage,
- un pointeau de soupape passant au travers dudit boîtier, comportant une première extrémité actionnée par un ensemble d'actionneur à l'extérieur dudit boîtier et une seconde extrémité commandant l'ouverture et la fermeture de ladite ouverture de dosage,
où ladite unité de compensateur thermique peut être agencée pour coopérer avec l'unité d'actionneur et le boîtier afin de compenser une dilatation thermique différente du boîtier et de l'ensemble d'actionneur afin d'assurer un contact élastique entre une butée d'extrémité du boîtier, l'ensemble d'actionneur et le pointeau de soupape, ladite unité de compensateur thermique comprenant
- un moyen de transmission (1b) destiné à transmettre une extension axiale de l'ensemble d'actionneur à un boîtier de compensateur (2, 3) en sollicitant un fluide hydraulique depuis une première chambre de fluide (4) vers une seconde chambre de fluide (5) dans une phase d'activation dudit ensemble d'actionneur, dans lequel la première chambre de fluide (4) et la seconde chambre de fluide (5) sont reliées et comprennent ledit fluide hydraulique suivant une répartition prédéterminée dans un état initial dans lequel l'ensemble d'actionneur n'est pas actif, et
- un moyen de rétablissement (6) pour faire revenir le fluide hydraulique vers son état initial depuis la seconde chambre de fluide (5) vers la première chambre de fluide (4) dans une phase de désactivation de l'ensemble d'actionneur,
ladite première chambre de fluide (4) et ladite seconde chambre de fluide (5) comprennent respectivement au moins un élément élastique (7b, 8) de sorte qu'un volume respectif de la première chambre de fluide (4) et de la seconde chambre de fluide (5) est variable à l'intérieur de limites prédéterminées et ledit moyen de transmission (1b) est relié audit élément élastique (7b) de ladite première chambre de fluide (4) et/ou constitue une partie de celui-ci, et ledit moyen de rétablissement (6) est relié audit élément élastique (8) de ladite seconde chambre de fluide (5) et/ou constitue une partie de celui-ci.

2. Unité de compensateur thermique selon la revendication 1, **caractérisée en ce que** ledit élément élastique respectif (7a, 7b, 8) est une membrane métallique.

3. Dispositif de dosage, en particulier une soupape d'injection destinée à un système d'injection de carburant dans un moteur à combustion interne, comprenant
- un boîtier avec une ouverture de dosage,
- un pointeau de soupape passant au travers dudit boîtier, ayant une première extrémité actionnée par un ensemble d'actionneur à l'extérieur dudit boîtier et une seconde extrémité commandant l'ouverture et la fermeture de ladite ouverture de dosage,
**caractérisé par**
- une unité de compensateur thermique selon l'une quelconque des revendications 1 ou 2.
